# EUROPÄISCHE PATENTSCHRIFT

(11) **EP 2 678 364 B1**
(45) Veröffentlichungstag und Bekanntmachung des Hinweises auf die Patenterteilung: **08.04.2015**
(21) Anmeldenummer: 12704425.3
(22) Anmeldetag: 20.02.2012
(51) Int. Cl.: C08G 18/28, C08G 18/67, C08G 18/72, C08G 18/81, C09D 5/04

(54) **RHEOLOGIEMITTEL FÜR STRAHLUNGSHÄRTBARE BESCHICHTUNGSMASSEN**
RHEOLOGICAL AGENT FOR RADIATION-CURABLE COATING MATERIALS
AGENT RHÉOLOGIQUE POUR DES MATIÈRES DE REVÊTEMENT DURCISSABLES PAR RAYONNEMENT

(30) Priorität: 22.02.2011 EP 11155426
(43) Veröffentlichungstag der Anmeldung: 01.01.2014
(73) Patentinhaber: BASF SE, 67056 Ludwigshafen (DE)
(72) Erfinder: SCHWALM, Reinhold, 67157 Wachenheim (DE); BECK, Erich, 68526 Ladenburg (DE)
(74) Vertreter: Reinhardt, Jürgen
(86) Internationale Anmeldenummer: PCT/EP2012/052830
(87) Internationale Veröffentlichungsnummer: WO 2012/113739

(56) Entgegenhaltungen:
- EP-A1- 2 233 536
- WO-A1-00/31194
- DE-A1- 10 042 152
- US-A- 6 069 217

## Beschreibung

Die vorliegende Erfindung betrifft neue strahlungshärtbare Verbindungen, deren Einsatz in strahlungshärtbaren Beschichtungsmassen, derartige strahlungshärtbare Beschichtungsmassen und die Verwendung der neue strahlungshärtbare Verbindungen als Rheologiemittel in strahlungshärtbaren Beschichtungsmassen.

Bei der Applikation von Beschichtungen, insbesondere mittels Sprühauftrag müssen relativ niedrigviskose Formulierungen verwendet werden. Die niedrige Viskosität der Formulierungen bereitet insbesondere dann Schwierigkeiten, wenn vertikale Bauteile beschichtet werden müssen, da es in diesem Fall zu einen Ablaufen der Beschichtungen und damit zu inhomogener Schichtdickenverteilung am Bauteil kommt. Diese Probleme sind relativ gering ausgeprägt bei hochlösemittelhaltigen oder wässrigen Formulierungen, da sich die Viskosität durch die Verdunstung des Lösemittels oder Wassers bei der Applikation deutlich erhöht.

Bei Lösemittellacken mit einem hohen Feststoffgehalt und insbesondere bei 100%igen UV härtbaren Lacken ist eine Viskositätserhöhung kaum feststellbar. Daher wirken die klassischerweise eingesetzten Rheologiehilfsmittel (Verdicker oder Sag Control Agents) kaum oder nur in hohen Konzentrationen.

Da hohe Konzentrationen an Hilfsmitteln insbesondere bei UV härtbaren Lacken die Netzwerkdichte herabsetzen, besteht ein Bedarf an verbesserten Rheologiehilfsmitteln oder solchen, die die Netzwerkdichte nicht signifikant negativ beeinflussen.

Rheologiehilfsmittel, die durch Umsetzung eines Isocyanats mit einem Amin zu einem Harnstoff erhätlich sind, sind bereits bekannt.

WO 2005/005558 (= US 7576151) beschreibt die Umsetzung von Polyisocyanaten mit Aminosäureestern.

US 4,311,622, EP 198519 und EP 192304 beschrieben die bevorzugt stöchiometrische Umsetzung von Isocyanaten mit Monoaminen, u.a. Benzylamin, und den Einsatz der so erhaltenen Produkte als Rheologiehilfsmittel.

Nachteilig ist, daß diese Rheologiehilfsmittel, wie oben ausgeführt, bei strahlungshärtbaren Beschichtungsmassen die Netzwerksdichte herabsetzen.

US 4,965,317 beschreibt Rheologiehilfsmittel, die durch Copolymerisation von radikalisch polymerisierbaren Monomeren mit isocyanatgruppenhaltigen Monomeren bzw. nachträglicher Modifizierung mit Isocyanatgruppen erhalten werden.

US 4,540,734 beschreibt Rheologiehilfsmittel, für die zunächst ein isocyanatgruppenhaltiges Präpolymer hergestellt wird, das anschließend mit Ethanolaminen zu einem harnstoffterminierten Rheologiehilfsmittel umgesetzt wird.

WO 02/064684 beschreibt als Rheologiehilfsmittel, die Reaktionsprodukte der Umsetzung von Isocyanaten mit Aminen.

Das Dokument US 6 069 217 offenbart Rheologiehilfsmittel, die in Beschichtungszusammensetzungen verwendet werden (siehe Spalte 1, Zeilen 8-26, Spalte 14, Zeilen 54-56 und Spalte 15, Zeile 6). Im Beispiel 1 wird die Herstellung des Hilfsmittels beschrieben: Es werden unter anderem Hydroxyethylmethacrylat, Hexamethylendiisocyanat und N-hydrogeniertes Tallow-1,3-Propandiamin zur Reaktion gebracht. Im N-hydrogenierten Tallow-1,3-Propandiamin ist R1 Wasserstoff und R2 eine Alkylgruppe, die in der Mitte der Kette ein Heteroatom aufweist. Außerdem wird in Spalte 10, Zeile 38 die Verwendung von Benzylamin als alternatives Capping-Agent vorgeschlagen.

Keines der Dokumente löst das Problem der Herabsetzung der Netzwerksdichte bei deren Einsatz in strahlungshärtbaren Beschichtungsmassen.

Die Aufgabe wird gelöst durch Rheologiehilfsmittel, enthaltend
- mindestens eine (Meth)acrylatgruppe und damit verbunden
- mindestens einer Harnstoffgruppe der Formel (I)

   -NH-(CO)-NR¹R²

   worin
   R¹ und R² jeweils unabhängig voneinander Wasserstoff, Alkyl, Aryl, Cycloalkyl, Aralkyl bedeuten, mit der Maßgabe, daß mindestens einer der Reste ungleich Wasserstoff ist.

In einer bevorzugten Ausführungsform ist mindestens einer, bevorzugt genau einer der beiden Reste R¹ und R² ein Rest der Formel (II)

-R³-R⁴,

worin
- R³: für C₁ bis C₁₀-Alkylen, bevorzugt C₁ bis C₄-Alkylen, besonders bevorzugt C₁ bis C₂-Alkylen, und ganz besonders bevorzugt Methylen und
- R⁴: für optional substituiertes, bevorzugt unsubstituiertes C₆ bis C₁₂-Aryl steht.

Eine besonders bevorzugte Ausführungsform besteht darin, daß einer der Reste R¹ und R² Wasserstoff und einer einen Rest der Formel (II) darstellt.

Unter einem Alkylrest wird im Rahmen dieser Schrift ein aliphatischer, offenkettiger, verzweigter oder unverzweigter Kohlenwasserstoffrest mit 1 bis 20 Kohlenstoffatomen, bevorzugt 1 bis 10, besonders bevorzugt 1 bis 8 und ganz besonders bevorzugt 1 bis 4 Kohlenstoffatomen verstanden.

Beispiele für Alkylreste sind Methyl, Ethyl, *iso*-Propyl, n-Propyl, n-Butyl, *iso*-Butyl, *sek*-Butyl, *tert-*Butyl, n-Hexyl, n-Heptyl, 2-Ethylhexyl, 2-Propylheptyl, n-Octyl, n-Decyl, n-Dodecyl, n-Tetradecyl, n-Hexadecyl, n-Octadecyl, n-Eicosyl. Bevorzugte Alkylreste sind Methyl, Ethyl, *iso*-Propyl, n-Propyl, n-Butyl, *iso*-Butyl, *sek*-Butyl, *tert-*Butyl, n-Hexyl, n-Heptyl, 2-Ethylhexyl, 2-Propylheptyl, besonders bevorzugt sind Methyl, Ethyl, *iso*-Propyl, n-Propyl, n-Butyl, *iso*-Butyl, *sek*-Butyl, *tert*-Butyl und ganz besonders bevorzugt sind Methyl, Ethyl, *iso*-Propyl, n-Butyl, *tert*-Butyl.

Unter einem Arylrest wird im Rahmen dieser Schrift ein aromatischer, optional substituierter 6 bis 12 Kohlenstoffatome aufweisendes Ringsystem verstanden, bevorzugt ein optional durch Aryl, Alkyl, Aryloxy, Alkyloxy, Heteroatome und/oder Heterocyclen substituiertes 6 bis 12 Kohlenstoffatome aufweisendes Ringsystem.

Beispiele dafür sind Phenyl, Tolyl, Xylyl, α-Naphthyl, β-Naphthyl, Fluorenyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl. Bevorzugt sind Phenyl, Tolyl, α-Naphthyl, β-Naphthyl, Fluorenyl, besonders bevorzugt sind Phenyl, β-Naphthyl, Fluorenyl, ganz besonders bevorzugt ist Phenyl.

Unter einem Cycloalkyl wird im Rahmen dieser Schrift gegebenenfalls durch Aryl, Alkyl, Aryloxy, Alkyloxy, Heteroatome und/oder Heterocyclen substituiertes C₅ - C₁₂-Cycloalkyl verstanden, beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl. Bevorzugt ist das Cycloalkyl nicht substituiert.

Bevorzugtes Cycloalkyl ist Cyclopentyl, Cyclohexyl, Cyclooctyl, Cyclododecyl, besonders bevorzugt ist Cyclopentyl, Cyclohexyl.

Unter einem Aralkyl wird im Rahmen dieser Schrift ein durch einen oder mehrere, bevorzugt genau einen Arylrest substituierter Alkylrest verstanden. Bevorzugt weist der Arylrest 6 bis 12 Kohlenstoffatome auf und der Alkylrest 1 bis 6, besonders bevorzugt 1 bis 4, ganz besonders bevorzugt 1 bis 2 und insbesondere genau ein Kohlenstoffatom auf.

Beispiele für Aralkyl sind Benzyl, 2-Phenylethyl, 2-Phenylpropyl, 2-Phenylprop-2-yl, bevorzugt sind Benzyl, 2-Phenylethyl, besonders bevorzugt ist Benzyl.

Bei C₁ bis C₁₀-Alkylen, bevorzugt C₁ bis C₄-Alkylen, besonders bevorzugt C₁ bis C₂-Alkylen handelt es sich beispielsweise um Methylen, 1,2-Ethylen, 1,2- oder 1,3-Propylen, 1,2-, 1,3- oder 1,4-Butylen, 1,6-Hexylen, 1,8-Octylen, 1,1-Dimethyl-1,2-ethylen oder 1,2-Dimethyl-1,2-ethylen. Ein bevorzugte Möglichkeit derartige Rheologiehilfsmittel herzustellen besteht in dem Aufbau eines Polyurethan(meth)acrylats (A), in dem man mindestens eine Verbindung, die mindestens eine, bevorzugt genau eine gegenüber Isocyanat reaktive Gruppe und mindestens eine (Meth)acrylatgruppe aufweist mit mindestens einem Di- oder Polyisocyanat und optional weiteren Aufbaukomponenten so umsetzt, daß pro Molekül im statistischen Mittel noch mindestens eine freie Isocyanatgruppe verbleibt und diese mindestens eine freie Isocyanatgruppe mit einem Amin der Formel (III)

H-NR¹R²

umsetzt.

Besonders bevorzugte strahlungshärtbare Polyurethan(meth)acrylate (A) sind aufgebaut aus
(a1) mindestens einem aliphatischen und/oder cycloaliphatischen Diisocyanat und/oder mindestens einem Polyisocyanat auf Basis aliphatischer und/oder cycloaliphatischer Diisocyanate,
(a2) wenigstens einer Verbindung mit mindestens einer, bevorzugt genau einer gegenüber Isocyanatgruppen reaktiven Gruppe und mindestens einer radikalisch polymerisierbaren C=C-Doppelbindung,
(a3) optional wenigstens einer Verbindung mit mindestens zwei gegenüber Isocyanatgruppen reaktiven Gruppen, die ausgewählt sind unter Hydroxy-, Mercapto-, primären und/oder sekundären Aminogruppen, mit einem zahlenmittleren Molgewicht Mn von nicht mehr als 500 g/mol,
(a4) optional wenigstens einer Verbindung mit mindestens zwei gegenüber Isocyanatgruppen reaktiven Gruppen, die ausgewählt sind unter Hydroxy-, Mercapto-, primären und/oder sekundären Aminogruppen, mit einem zahlenmittleren Molgewicht Mn von mehr als 500 g/mol,
(a5) mindestens einem Amin der Formel (III)

   H-NR¹R²,

   sowie
(a6) optional wenigstens einer von (a2) und (a5) verschiedenen Verbindung, die genau eine gegenüber Isocyanatgruppen reaktive Gruppe aufweist sowie
(a7) optional wenigstens einem von (a1) verschiedenen Polyisocyanat.

In den Verbindungen (A) werden bevorzugt keine isocyanatgruppenhaltigen Verbindungen eingesetzt, bei denen die Isocyanatgruppen teilweise oder vollständig mit sogenannten Blockierungsmitteln umgesetzt wurden. Unter Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche erfindungsgemäß bevorzugt nicht eingesetzten Verbindungen mit blockierten Isocyanatgruppen kommen üblicherweise in Dual-Cure-Beschichtungsmitteln zur Anwendung, die über Isocyanatgruppenhärtung endgehärtet werden. Bevorzugt weisen die erfindungsgemäßen Polyurethane nach ihrer Herstellung im Wesentlichen keine freien Isocyanatgruppen mehr auf, d.h. in der Regel weniger als 1 Gew.-% NCO, bevorzugt weniger als 0,75, besonders bevorzugt weniger als 0,66 und ganz besonders bevorzugt weniger als 0,3 Gew.-% NCO (berechnet mit einem Molgewicht von 42 g/mol).

### Komponenten (a1)

Als Polyisocyanate als Komponenten (a1) sind für die erfindungsgemäßen Polyurethane besonders Polyisocyanate auf Basis (cyclo)aliphatischer Diisocyanate geeignet. Als Komponente (a1) sind zusätzlich (cyclo)aliphatische Diisocyanate geeignet.

Der Begriff (cyclo)aliphatische steht in dieser Schrift kurz für cycloaliphatisch oder aliphatisch.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Die erfindungsgemäß einsetzbaren Polyisocyanate weisen keine aromatischen Gruppen auf.

Bei den monomeren Isocyanaten handelt es sich bevorzugt um Diisocyanate, die genau zwei Isocyanatgruppen tragen. Es könnte sich aber prinzipiell auch um Monoisocyanate mit einer Isocyanatgruppe handeln, diese sind aber weniger bevorzugt.

Es kommen prinzipiell auch höhere Isocyanate mit im Mittel mehr als 2 Isocyanatgruppen in Betracht, diese sind aber weniger bevorzugt. Dafür eignen sich beispielsweise Triisocyanate wie Triisocyanatononan oder 2'-Isocyanatoethyl-(2,6-diisocyanatohexanoat), oder die Gemische aus Di-, Tri- und höheren Polyisocyanaten.

Die monomeren Isocyanate weisen im wesentlichen keine Umsetzungsprodukte der Isocyanatgruppen mit sich selbst auf.
Bei den monomeren Isocyanaten handelt es sich bevorzugt um Isocyanate mit 4 bis 20 C-Atomen. Beispiele für übliche aliphatische Diisocyanate sind Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat), Trimethylhexandiisocyanat oder Tetramethylhexandiisocyanat. Beispiele für cycloaliphatische Diisocyanate sind 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Besonders bevorzugte Diisocyanate sind 1,6-Hexamethylendiisocyanat, 1,3-Bis(isocyanatomethyl)cyclo-hexan und Isophorondiisocyanat, ganz besonders bevorzugt sind Isophorondiisocyanat und 1,6-Hexamethylendiisocyanat, insbesondere bevorzugt ist Isophorondiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Der Gehalt an isomeren Verbindungen im Diisocyanat spielt für das erfindungsgemäße Verfahren keine entscheidende Rolle. So kann 1,6-Hexamethylendiisocyanat beispielsweise einen geringen Anteil an 2- und/oder 3-Methyl-1,5-pentamethylendiisocyanat enthalten.

Für die vorliegende Erfindung können Polyisocyanate sowohl auf Basis solcher Diisocyanate eingesetzt werden, die durch Phosgenierung der korrespondierenden Amine erhalten wird, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, wie 1,6-Hexamethylendiisocyanat (HDI), hergestellt werden durch Umsetzung der (cyclo)-aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was zu günstigen Farbzahlen der Produkte führen kann. Es stellt einen weiteren Vorteil der vorliegenden Erfindung dar, daß das erfindungsgemäße Verfahren auf aliphatischen Diisocyanaten basiert und unabhängig von deren Herstellung ist, d.h. unabhängig davon, ob die Herstellung über eine Phosgenierung oder ein phosgenfreies Verfahren erfolgt ist.
In einer Ausführungsform der vorliegenden Erfindung weist das Diisocyanat einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Diisocyanate mit einem höheren Chlorgehalt eingesetzt werden, beispielsweise bis zu 500 ppm.

Selbstverständlich können auch Gemische aus Diisocyanat, das durch Umsetzung des korrespondierenden Diamins mit beispielsweise Harnstoff und Alkoholen und Spaltung der erhaltenen Biscarbaminsäureester erhalten worden ist, mit solchem Diisocyanat, das durch Phosgenierung des korrespondierenden Amins erhalten worden sind, eingesetzt werden.

Bei den Polyisocyanaten auf Basis dieser Diisocyanate handelt es sich bevorzugt um folgende Verbindungen:
1) Isocyanuratgruppen aufweisende Polyisocyanate von aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und/oder Isophorondiisocyanat. Bei den dabei vorliegenden Isocyanuraten handelt es sich insbesondere um Tris-isocyanatoalkyl- bzw. Trisisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiongruppen aufweisende Polyisocyanate mit aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan-und/oder Allophanatgruppen aufweisenden Polyisocyanate haben im allgemeinen einen NCO-Gehalt von 12 bis 24 Gew.-% und eine mittlere NCO-Funktionalität von 2,1 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Zn-(II)-Verbindungen, jeweils in Anwesenheit von ein-, zwei- oder mehrwertigen, bevorzugt einwertigen Alkoholen, hergestellt werden. Die Urethan- und/oder Allophanatgruppen aufweisenden Polyisocyanate können auch im Gemisch mit anderen Polyisocyanaten, insbesondere den unter 1) genannten, hergestellt werden.
4) Uretonimin-modifizierte Polyisocyanate.
5) Carbodiimid-modifizierte Polyisocyanate.
6) Hyperverzweigte Polyisocyanate, wie sie beispielsweise bekannt sind aus der DE-A1 10013186 oder DE-A1 10013187.
7) Polyurethan-Polyisocyanat-Präpolymere, aus Di- und/oder Polyisocyanaten mit Alkoholen.
8) Polyharnstoff-Polyisocyanat-Präpolymere.
9) Hydrophil modifizierte Polyisocyanate, d.h. Polyisocyanate, die neben den unter 1-10 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche beispielsweise von Phosphorsäure, Phosphonsäure, Schwefelsäure oder Sulfonsäure, bzw. ihren Salzen abgeleitet sind.
10) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstell bar.

Bei bevorzugten Verbindungen (a1) enthält das Polyisocyanat mindestens eine Gruppierung, ausgewählt aus der Gruppe bestehend aus Isocyanuraten, Biureten und Allophanaten, bevorzugt aus der Gruppe bestehend aus Isocyanuraten und Allophanaten, wie beschrieben in der WO 00/39183, was hiermit durch Bezugnahme Bestandteil der vorliegenden Offenbarung sei, besonders bevorzugt handelt es sich um ein isocyanuratgruppenhaltiges Polyisocyanat.
In einer besonders bevorzugten Ausführungsform handelt es sich bei dem Polyisocyanat (a1) um ein Polyisocyanat auf Basis von 1,6-Hexamethylendiisocyanat und/oder Isophorondiisocyanat, ganz besonders bevorzugt auf Basis von Isophorondiisocyanat.

Insbesondere handelt es sich bei der Verbindung (a1) um ein Isocyanuratgruppen enthaltendes Polyisocyanat auf Basis von 1,6-Hexamethylendiisocyanat.

In einer weiteren bevorzugten Ausführungsform handelt es sich bei den Polyisocyanaten (a1) um allophanatgruppenhaltige Polyisocyanate, in denen zumindest ein Teil der Komponenten (a2) über Allophanatgruppen gebunden ist, wie beschrieben in der WO 00/39183. Insbesondere handelt es sich dabei um Polyisocyanate auf Basis 1,6-Hexamethylendiisocyanat.

### Komponenten (a2)

Komponenten (a2) sind wenigstens eine, beispielsweise ein bis drei, bevorzugt ein bis zwei und ganz besonders bevorzugt genau eine Verbindung mit mindestens einer, bevorzugt genau einer gegenüber Isocyanatgruppen reaktiven Gruppe und mindestens einer, bevorzugt ein bis drei, besonders bevorzugt ein bis zwei und ganz besonders bevorzugt genau einer radikalisch polymerisierbaren C=C-Doppelbindung.

Bevorzugte Verbindungen der Komponenten (a2) sind z. B. die Ester zwei- oder mehrwertiger Alkohole mit α,β-ethylenisch ungesättigen Mono- und/oder Dicarbonsäuren und deren Anhydriden. Als α,β-ethylenisch ungesättigte Mono- und/oder Dicarbonsäuren und deren Anhydride können z. B. Acrylsäure, Methacrylsäure, Fumarsäure, Maleinsäure, Maleinsäureanhydrid, Crotonsäure, Itaconsäure, etc. eingesetzt werden. Bevorzugt werden Acrylsäure und Methacrylsäure, besonders bevorzugt Acrylsäure eingesetzt.

Geeignete Alkohole sind z. B. Diole wie Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclo-hexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Di-ethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Tricyclodecandimethanol.

Geeignete Triole und Polyole weisen z. B. 3 bis 25, bevorzugt 3 bis 18 Kohlenstoffatome auf. Dazu zählen z. B. Trimethylolbutan, Trimethylolpropan, Trimethylolethan, Pentaerythrit, Glycerin, Ditrimethylolpropan, Dipentaerythrit, Ditrimethylolpropan, Sorbit, Mannit, Diglycerol, Threit, Erythrit, Adonit (Ribit), Arabit (Lyxit), Xylit, Dulcit (Galactit), Maltit oder Isomalt.

Vorzugsweise sind die Verbindungen der Komponenten (a2) ausgewählt unter 2-Hydroxyethylacrylat, 2-Hydroxyethylmethacrylat, 2-Hydroxypropylacrylat, 2-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat, 3-Hydroxy-2-ethylhexylmethacrylat, Trimethylolpropanmono- oder -diacrylat, Pentaerythritdi- oder -triacrylat, Dipentaerythritpentaacrylat und Mischungen davon.

Besonders als Verbindungen (a2) bevorzugt sind 2-Hydroxyethylacrylat, 2-Hydroxyethylmethacrylat, 2-Hydroxypropylacrylat, 2-Hydroxypropylmethacrylat, Pentaerythrittriacrylat und Dipentaerythritpentaacrylat.

Bevorzugte Verbindungen (a2) sind 2-Hydroxyethylacrylat, 2-Hydroxyethylmethacrylat, 2-Hydroxypropylacrylat, 2-Hydroxypropylmethacrylat und Pentaerythrittriacrylat, besonders bevorzugt sind 2-Hydroxyethylacrylat und Pentaerythrittriacrylat und ganz besonders bevorzugt ist 2-Hydroxyethylacrylat.

### Komponenten a3)

Bei den optionalen Komponenten a3) handelt es sich um wenigstens eine Verbindung mit mindestens zwei gegenüber Isocyanatgruppen reaktiven Gruppen, die ausgewählt sind unter Hydroxy-, Mercapto-, primären und/oder sekundären Aminogruppen, bevorzugt Hydroxy- und primäre Aminogruppen, besonders bevorzugt Hydroxygruppen.

Niedermolekulare Alkohole a3) haben ein Molekulargewicht von nicht mehr als 500 g/mol. Besonders bevorzugt sind Alkohole mit 2 bis 20 Kohlenstoffatomen und beispielsweise 2 bis 6 Hydroxygruppen, bevorzugt 2 bis 4, besonders besonders 2 bis 3 und ganz besonders bevorzugt genau 2 Hydroxygruppen. Bevorzugt sind insbesondere hydrolysestabile kurzkettige Diole mit 4 bis 20, bevorzugt 6 bis 12 Kohlenstoffatomen. Dazu zählen vorzugsweise 1,1-, 1,2-, 1,3- oder 1,4-Di(hydroxymethyl)cyclohexan, 2,2-Bis(4'-hydroxycyclohexyl)propan, 1,2-, 1,3- oder 1,4-Cyclohexandiol, Tetramethylcyclobutandiol, Cyclooctandiol oder Norbornandiol. Besonders bevorzugt werden aliphatische Kohlenwasserstoffdiole, wie die isomeren Butandiole, Pentandiole, Hexandiole, Heptandiole, Octandiole, Nonandiole, Decandiole, Undecandiole und Dodecandiole eingesetzt. Besonders bevorzugt sind 1,2-, 1,3- oder 1,4-Butandiol, 1,4-Pentandiol, 1,5-Pentandiol, 1,6-Hexandiol, 2,5-Hexandiol, Di(hydroxymethyl)cyclohexan Isomere und 2,2-Bis(4'-hydroxycyclohexyl)propan. Ganz besonders bevorzugt handelt es sich bei den Diolen (a3) um cycloaliphatische Diole, insbesondere um 1,1-, 1,2-, 1,3- oder 1,4-Di(hydroxymethyl)cyclohexan, 2,2-Bis(4'-hydroxycyclohexyl)propan, 1,2-, 1,3- oder 1,4-Cyclohexandiol.

### Komponenten a4)

Geeignete Verbindungen a4) sind weiterhin polymere Polyole. Vorzugsweise liegt das zahlenmittlere Molekulargewicht Mₙ dieser Polymere in einem Bereich von etwa 500 bis 100.000, besonders bevorzugt 500 bis 10.000. Die OH-Zahlen liegen vorzugsweise in einem Bereich von etwa 20 bis 300 mg KOH/g Polymer.

Bevorzugte Verbindungen a4) sind Polyesterole, Polyetherole sowie Polycarbonatpolyole, besonders bevorzugt Polyesterole und Polyetherole und ganz besonders bevorzugt Polyesterole.

Bevorzugte Polyesterole sind solche auf Basis von aliphatischen, cycloaliphatischen und/oder aromatischen Di-, Tri- und/oder Polycarbonsäuren mit Di-, Tri- und/oder Polyolen sowie Polyesterole auf Lacton-Basis.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Bu-tylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 2000, Poly-1,2-propandiol mit einer Molmasse zwischen 134 und 2000, Polyethylenglykol mit einer Molmasse zwischen 106 und 2000, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxygruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Bevorzugt handelt es sich bei dem Polyesterol auf Lactonbasis um ein Polycaprolactondiol, bei dem es sich formal um ein Anlagerungsprodukt von Caprolacton an ein Diol HO-R-OH handelt, das die Formel

HO-[-CH₂-CH₂-CH₂-CH₂-CH₂-(CO)-O]ₙ-R-OH

oder

HO-[-CH₂-CH₂-CH₂-CH₂-CH₂-(CO)-O]ₙ₁-R-[-O-(CO)-CH₂-CH₂-CH₂-CH₂-CH₂-]ₙ₂-OH

aufweist,
worin
n, n1 und n2 für positive ganze Zahlen stehen, für die gilt n = 1 bis 5 und (n1 + n2) = 1 bis 5 und
- R: einen zweibindigen aliphatischen oder cycloaliphatischen Rest mit mindestens einem Kohlenstoffatom, bevorzugt 2 bis 20, besonders bevorzugt 2 bis 10, ganz besonders bevorzugt 3 bis 6 Kohlenstoffatomen.

Aliphatische Reste R sind beispielsweise lineares oder verzweigtes Alkylen, z.B. Methylen, 1,2-Ethylen, 1,2- oder 1,3-Propylen, 1,2-, 1,3- oder 1,4-Butylen, 1,1-Dimethyl-1,2-ethylen oder 1,2-Dimethyl-1,2-ethylen, 1,5-Pentylen, 1,6-Hexylen, 1,8-Octylen, 1,10-Decylen, oder 1,12-Dodecylen. Bevorzugt sind 1,2-Ethylen, 1,2- oder 1,3-Pro-pylen, 1,4-Butylen und 1,5-Pentylen, besonders bevorzugt 1,4-Butylen und 1,6-Hexylen.

Denkbar, wenn auch weniger bevorzugt, sind cycloaliphatische Reste, beispielsweise Cyclopropylen, Cyclopentylen, Cyclohexylen, Cyclooctylen und Cyclododecylen.

Bevorzugte Polyesterole als Verbindungen (a4) weisen eine Funktionalität an freien Hydroxygruppen von mindestens 2 auf, besonders bevorzugt von 2 bis 6, ganz besonders bevorzugt von 2 bis 4, insbesondere von 2 bis 3 und speziell von genau 2.

Die Molekulargewichte Mₙ der Polyesterole liegen bevorzugt zwischen 500 und 4000 (Mₙ bestimmt durch Gelpermeationschromatographie mit Polystyrol als Standard und Tetrahydrofuran als Elutionsmittel).

### Komponente (a5)

Als Komponente (a5) kommt mindestens ein, bevorzugt ein bis drei, besonders bevorzugt ein bis zwei und ganz besonders bevorzugt genau ein Amin der Formel (III)

H-NR¹R²,

in Betracht.

Diese Komponente (a5) wird zumindest teilweise, bevorzugt vollständig mit freien Isocyanatgruppen umgesetzt, so daß sich Harnstoffgruppen herausbilden.

Die Reste R¹ und R² sind oben definiert.

Bevorzugte Amine (a5) sind primäre oder sekundäre Amine, bevorzugt sind primäre Amine, besonders bevorzugt sind Anilin, substituierte Aniline, in denen der Phenylrest einen oder mehrere Substituenten trägt, Benzylamin und Benzylamine, in denen der Benzylrest einen oder mehrere Substituenten trägt.

Ganz besonders bevorzugt sind Aniline, Benzylamine, substituierte Benzylamine, wie Brom-, Chlor-, Methoxy-, Fluor-benzylamin, optisch aktive Amine wie beschrieben in WO 2005/005558, dort besonders von Seite 3, Zeile 19 bis Seite 10, Zeile 4 beschrieben sowie 9-Amino-fluoren.

Beispiele für substituiert Benzylamine sind N-Methylbenzylamin, N-Ethylbenzylamin, N-Isopropylbenzylamin, N-Phenylbenzylamin, Dibenzylamin, 2-Methoxybenzylamin, 2-Chlorbenzylamin, 4-Fluorbenzylamin, 4-Methylbenzylamin, 4-Methoxybenzylamin, 3-(Trifluormethyl)-benzylamin, 2,6-Difluorbenzylamin, 3,4-Dichlorbenzylamin, N-Benzyl-2-phenethylamin, 1-Naphthylmethylamin, 4-Hydroxy-3-methoxybenzylamin (Vanillylamin), 1,2,3,4-Tetrahydroisochinolin, Phenethylamin.

Insbesondere bevorzugt sind Anilin und Benzylamin, speziell Benzylamin.

### Komponenten (a6)

In den erfindungsgemäßen Polyurethan(meth)acrylaten können als optionale Komponenten (a6) wenigstens eine weitere Verbindung mit genau einer gegenüber Isocyanatgruppen reaktiven Gruppe eingesetzt werden. Bei dieser Gruppe kann es sich um eine Hydroxy-, Mercapto-, oder eine primäre oder sekundäre Aminogruppe, jedoch um eine andere als Komponente (a5) handeln. Geeignete Verbindungen (a6) sind die üblichen, dem Fachmann bekannten Verbindungen, die als sogenannte Abstopper zur Herabsetzung der Zahl reaktiver freier Isocyanatgruppen bzw. zur Modifizierung der Polyurethaneigenschaften üblicherweise bei der Polyurethanherstellung eingesetzt werden. Dazu zählen z. B. monofunktionelle Alkohole, wie Methanol, Ethanol, n-Propanol, Isopropanol, n-Butanol etc. Geeignete Komponenten (a6) sind auch Amine mit einer primären oder sekundären Aminogruppe, wie z. B. Methylamin, Ethylamin, n-Propylamin, Diisopropylamin, Dimethylamin, Diethylamin, Di-n-propylamin, Diisopropylamin etc.

### Komponenten (a7)

In den erfindungsgemäßen Polyurethanen kann als optionale Komponenten (a7) wenigstens ein von den eingebauten Verbindungen der Komponenten (a1) verschiedenes Di- oder Polyisocyanat eingesetzt werden. Bevorzugt werden als Komponenten (a7) keine Polyisocyanate eingesetzt, bei denen die Isocyanatgruppen mit einem Blockierungsmittel umgesetzt wurden.

Bevorzugte Verbindungen (a7) sind Di- oder Polyisocyanate mit einer NCO-Funktionalität von 2 bis 4,5, besonders bevorzugt 2 bis 3,5. Bevorzugt werden als Komponente (a7) aliphatische, cycloaliphatische und araliphatische Diisocyanate eingesetzt. Dies können beispielsweise die oben unter (a1) aufgeführten Diisocyanate sein, sind jedoch von der im Polyurethan tatsächlich eingesetzten Verbindung (a1) verschieden. Bevorzugt sind Verbindungen (a7), die neben 2 oder mehreren Isocyanatgruppen noch eine Gruppe, ausgewählt aus der Gruppe der Urethan-, Harnstoff-, Biuret-, Allophanat-, Carbodiimid-, Urethonimin-, Uretdion- und Isocyanuratgruppen aufweisen.

Dies sind beispielsweise die oben unter (a1) beschriebenen, mit den Nummern 1) bis 10) bezeichneten Polyisocyanat oder deren Gemische sein.

Bevorzugt werden als Komponente (a7) 1,6-Hexamethylendiisocyanat, Isophorondiisocyanat, 1,3- und 1,4-Bis(isocyanatomethyl)cyclohexan, deren Isocyanurate, Biurete und Mischungen davon eingesetzt.

Enthalten die erfindungsgemäßen Polyurethanacrylate neben der Komponente (a1) noch eine Komponente (a7), so beträgt der Anteil der Verbindungen der Komponente (a7) vorzugsweise 0,1 bis 90 Gew.-%, besonders bevorzugt 1 bis 50 Gew.-%, insbesondere 5 bis 30 Gew.-%, bezogen auf die Gesamtmenge der Verbindungen der Komponenten (a1) und (a7).

In einer bevorzugten Ausführungsform wird neben den Komponenten (a1) keine weitere Komponente (a7) in die Polyurethan(meth)acrylate (A) eingebaut.

### Komponente (C)

Die erfindungsgemäße Mischung der Polyurethane (A) kann optional wenigstens eine weitere Verbindung (C) enthalten, wie sie üblicherweise als Reaktivverdünner eingesetzt wird. Dazu zählen z. B. die Reaktivverdünner, wie sie in P.K.T. Oldring (Herausgeber), Chemistry & Technology of UV & EB Formulations for Coatings, Inks & Paints, Vol. II, Chapter III: Reactive Diluents for UV & EB Curable Formulations, Wiley and SITA Technology, London 1997 beschrieben sind.

Bevorzugte Reaktivverdünner sind von der Komponente (a2) verschiedene Verbindungen, die wenigstens eine radikalisch polymerisierbare C=C-Doppelbindungen aufweisen.

Reaktivverdünner sind beispielsweise Ester der (Meth)acrylsäure mit Alkoholen, die 1 bis 20 C-Atome aufweisen, z.B. (Meth)acrylsäuremethylester, (Meth)acrylsäureethyl-ester, (Meth)acrylsäure-n-butylester, (Meth)acrylsäure-tert-butylester, (Meth)acrylsäure-2-ethylhexylester, Dihydrodicyclopentadienylacrylat, Vinylaromatische Verbindungen, z.B. Styrol, Divinylbenzol, α,β-ungesättigte Nitrile, z.B. Acrylnitril, Methacrylnitril, α,β-ungesättigte Aldehyde, z.B. Acrolein, Methacrolein, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure, N-Vinylpyrrolidon, N-Vinyllactame, wie z.B. N-Vinylcaprolactam, N-Vinyl-N-Alkyl-carbonsäureamide oder N-Vinyl-carbonsäureamide, wie z. B. N-Vinylacetamid, N-Vinyl-N-methylformamid und N-Vinyl-N-methylacetamid oder Vinylether, z.B. Methylvinylether, Ethylvinylether, *n*-Propylvinylether, *iso*-Propylvinylether, *n*-Butylvinylether, *sek*-Butylvinylether, *iso*-Butylvinylether, *tert*-Butylvinylether, 4-Hydroxybutylvinylether, sowie Gemische davon.

Weitere geeignete Reaktivverdünner sind Trimethylolpropanmono-formalacrylat, Glycerinformalacrylat, 4-Tetrahydropyranylacrylat, 2-Tetrahydropyranyl-methacrylat und Tetrahydrofurfurylacrylat.

Verbindungen mit mindestens zwei radikalisch polymerisierbare C=C-Doppel-bindungen: Dazu zählen insbesondere die Diester und Polyester der zuvorgenannten α,β-ethylenisch ungesättigten Mono- und/oder Dicarbonsäuren mit Diolen oder Poly-olen. Besonders bevorzugt sind Hexandioldiacrylat, Hexandioldimethacrylat, Octandioldiacrylat, Octandioldimethacrylat, Nonandioldiacrylat, Nonandioldimethacrylat, Decandioldiacrylat, Decandioldimethacrylat, Pentaerythritdiacrylat, Dipentaerythrittetraacrylat, Dipentaerythrittriacrylat, Pentaerythrittetraacrylat, etc. Bevorzugt sind auch die Ester alkoxylierter Polyole, mit α,β-ethylenisch ungesättigten Mono-und/oder Dicarbonsäuren wie z. B. die Polyacrylate oder -methacrylate von je OH-Gruppe im statistischen Mittel ein- bis zehnfach, bevorzugt ein bis fünffach, besonders bevorzugt ein- bis dreifach und ganz besonders bevorzugt ein- bis zweifach alkoxyliertem, beispielsweise ethoxyliertem und/oder propoxyliertem, bevorzugt ethoxyliertem oder propoxyliertem und besonders bevorzugt ausschließlich ethoxyliertem Trimethylolpropan, Glycerin oder Pentaerythrit. Geeignet sind weiterhin die Ester alicylischer Diole, wie Cyclohexandioldi(meth)acrylat und Bis(hydroxymethyl-ethyl)cyclohexan-di(meth)acrylat.

Weitere geeignete Reaktivverdünner sind beispielsweise Urethan(meth)acrylate, Epoxy(meth)-acrylate,Polyether(meth)acrylate, Polyester(meth)acrylate oder Polycarbonat(meth)acrylate.

### U rethan(meth)acrylate

Urethan(meth)acrylate sind z.B. erhältlich durch Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen.

Derartige Urethan(meth)acrylate enthalten als Aufbaukomponenten im wesentlichen:
(1) mindestens ein organisches aliphatisches, aromatisches oder cycloaliphatisches Di- oder Polyisocyanat, wie beispielsweise die oben unter (a1) aufgeführten
(2) mindestens eine Verbindung mit mindestens einer gegenüber Isocyanat reaktiven Gruppe und mindestens einer radikalisch polymerisierbaren ungesättigten Gruppe, wie beispielsweise die unter (a2) aufgeführten, und
(3) gegebenenfalls mindestens eine Verbindung mit mindestens zwei gegenüber Isocyanat reaktiven Gruppen wie beispielsweise die unter (a3) aufgeführten.

Die Komponenten (1), (2) und (3) können die gleichen sein, wie oben für die erfindungsgemäßen Polyurethane (A) beschrieben.

Die Urethan(meth)acrylate haben vorzugsweise ein zahlenmittleres Molgewicht Mₙ von 500 bis 20 000, insbesondere von 500 bis 10 000 besonders bevorzugt 600 bis 3000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Besonders bevorzugte Urethan(meth)acrylate weisen eine mittlere OH-Funktionalität von 1,5 bis 4,5 auf.

### Epoxid(meth)acrylate

Epoxid(meth)acrylate sind bevorzugt erhältlich durch Umsetzung von Epoxiden mit (Meth)acrylsäure. Als Epoxide in Betracht kommen z.B epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, *iso*-Butylenoxid, 1-Butenoxid, 2-Butenoxid, Vinyloxiran, Styroloxid oder Epichlorhydrin, bevorzugt sind Ethylenoxid, Propylenoxid, *iso*-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-Epoxypropoxy)phenyl]octahydro-4,7-methano-5H-inden) (CAS-Nr. [13446-85-0]), Tris[4-(2,3-epoxypropoxy)phenyl]methan Isomere (CAS-Nr. [66072-39-7]), Phenol basierte Epoxy Novolake (CAS-Nr. [9003-35-4]) und Kresol basierte Epoxy Novolake (CAS-Nr. [37382-79-9]).

Bevorzugt sind Bisphenol-A-diglycidylether, Bisphenol-F-diglycidylether, Bisphenol-B-diglycidylether, Bisphenol-S-diglycidylether, besonders bevorzugt ist Bisphenol-A-diglycidylether.

Aliphatische Glycidylether sind beispielsweise 1,4-Butandioldiglycidether, 1,6-Hexandioldiglycidylether, Trimethylolpropantriglycidylether, Pentaerythrittetraglycidylether, 1,1,2,2-tetrakis[4-(2,3-epoxypropoxy)phenyl]ethan (CAS-Nr. [27043-37-4]), Diglycidyl-ether von Polypropylenglykol (α,ω-bis(2,3-epoxypropoxy)poly(oxypropylen) (CAS-Nr. [16096-30-3]) und von hydriertem Bisphenol A (2,2-bis[4-(2,3-epoxypro-poxy)cyclohexyl]propan, CAS-Nr. [13410-58-7]).

Bevorzugt sind 1,4-Butandioldiglycidether, 1,6-Hexandioldiglycidylether, Trimethylolpropantriglycidylether, Pentaerythrittetraglycidylether und (2,2-bis[4-(2,3-epoxy-propoxy)cyclohexyl]propan.

Besonders bevorzugt sind die oben erwähnten aromatischen Glycidylether.

Die Epoxid(meth)acrylate und -vinylether haben vorzugsweise ein zahlenmittleres Molgewicht Mₙ von 200 bis 20000, besonders bevorzugt von 200 bis 10000 g/mol und ganz besonders bevorzugt von 250 bis 3000 g/mol; der Gehalt an (Meth)acryl- oder Vinylethergruppen beträgt vorzugsweise 1 bis 5, besonders bevorzugt 2 bis 4 pro 1000 g Epoxid(meth)acrylat oder Vinyletherepoxid (bestimmt durch Gelpermeationschromatographie mit Polystyrol als Standard und Tetrahydrofuran als Elutionsmittel).

Bevorzugte Epoxid(meth)acrylate weisen eine OH-Zahl von 40 bis 400 mg KOH/g auf.

Bevorzugte Epoxid(meth)acrylate weisen eine mittlere OH-Funktionalität von 1,5 bis 4,5 auf.

Besonders bevorzugte Epoxid(meth)acrylate sind solche, wie sie aus Verfahren erhalten werden gemäß EP-A-54 105, DE-A 33 16 593, EP-A 680 985 und
EP-A-279 303, bei denen in einer ersten Stufe ein (Meth)acrylsäureester aus (Meth)acrylsäure und Hydroxyverbindungen hergestellt wird und in einer zweiten Stufe überschüssige (Meth)-acrylsäure mit Epoxiden umgesetzt wird.

### Polyester(meth)acrylate

Als Polyester(meth)acrylate kommen zumindest teilweise oder bevorzugt vollständig (meth)acrylierte Umsetzungsprodukte solcher Polyesterole in Betracht, wie sie oben unter den Verbindungen (a4) aufgeführt sind.

### Carbonat(meth)acrylate

Carbonat(meth)acrylate enthalten im Mittel vorzugsweise 1 bis 5, insbesondere 2 bis 4, besonders bevorzugt 2 bis 3 (Meth)acrylgruppen und ganz besonders bevorzugt 2 (Meth)acrylgruppen.

Das zahlenmittlere Molekulargewicht Mₙ der Carbonat(meth)acrylate ist vorzugsweise kleiner 3000 g/mol, besonders bevorzugt kleiner 1500 g/mol, besonders bevorzugt kleiner 800 g/mol (bestimmt durch Gelpermeationschromatgraphie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)-acrylsäure oder auch Umesterung mit (Meth)acrylsäureestern, wie es z.B. in EP-A 92 269 beschrieben ist. Erhältlich sind sie auch durch Umsetzung von Phosgen, Harnstoffderivaten mit mehrwertigen, z.B. zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Denkbar sind auch (Meth)acrylate oder Vinylether von Polycarbonatpolyolen, wie das Reaktionsprodukt aus einem der genannten Di- oder Polyole und einem Kohlensäureester sowie einem Hydroxygruppenhaltigen (Meth)acrylat oder Vinylether.

Geeignete Kohlensäureester sind z.B. Ethylen-, 1,2- oder 1,3-Propylencarbonat, Kohlensäuredimethyl-, -diethyl- oder-dibutylester.

Geeignete hydroxygruppenhaltige (Meth)acrylate sind beispielsweise 2-Hydroxyethyl(meth)-acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Geeignete hydroxygruppenhaltige Vinylether sind z.B. 2-Hydroxyethylvinylether und 4-Hydroxybutylvinylether.

Besonders bevorzugte Carbonat(meth)acrylate sind solche der Formel: 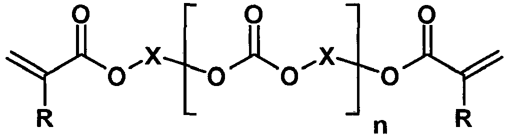 worin R für H oder CH₃, X für eine C₂-C₁₈ Alkylengruppe und n für eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat-(meth)acrylate.

Dazu zählen weiterhin auch übliche, dem Fachmann bekannte Polycarbonate mit endständigen Hydroxygruppen, die z. B. durch Umsetzung der zuvor genannten Diole mit Phosgen oder Kohlensäurediestern erhältlich sind.

### Polyether(meth)acrylate

Bevorzugt handelt es sich bei Polyether(meth)acrylaten um (Meth)Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Darüberhinaus kann ein- bis zwanzigfach und besonders bevorzugt drei- bis zehnfach ethoxyliertes, propoxyliertes oder gemischt ethoxyliertes und propoxyliertes und insbesondere ausschließlich ethoxyliertes Glycerin eingesetzt werden.

Bevorzugte multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat, Polyestepolyolenacrylate, Polyetherolacrylate und Triacrylat von ein- bis zwanzigfach alkoxyliertem, besonders bevorzugt ethoxyliertem Trimethylolpropan.

Polyether(meth)acrylate können ferner (Meth)acrylate von Poly-THF mit einem Molgewicht zwischen 162 und 2000, Poly-1,3-propandiol mit einem Molgewicht zwischen 134 und 2000 oder Polyethylenglykol mit einem Molgewicht zwischen 238 und 2000 sein.

Sofern die Aushärtung der erfindungsgemäßen Polyurethanacrylate bzw. Beschichtungsmasse nicht mit Elektronenstrahlen, sondern mittels UV-Strahlung erfolgt, enthalten die erfindungsgemäßen Zubereitungen vorzugsweise wenigstens einen Photoinitiator (B), der die Polymerisation ethylenisch ungesättigter Doppelbindungen initiieren kann.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen solche Photoinitiatoren (B), wie sie beschrieben sind in WO 2006/005491 A1, Seite 21, Zeile 18 bis Seite 22, Zeile 2 (entspricht US 2006/0009589 A1, Absatz [0150]), was hiermit durch Bezugnahme Bestandteil der vorliegenden Offenbarung sei.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxycyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Bevorzugt unter diesen Photoinitiatoren sind 2,4,6-Trimethylbenzoyldiphenylphosphinoxid, E-thyl-2,4,6-trimethylbenzoylphenylphosphinat, Bis-(2,4,6-trimethylbenzoyl)-phenylphosphinoxid, Benzophenon, 1-Hydroxy-cyclohexyl-phenylketon, 1-Benzoylcyclohexan-1-ol, 2-Hydroxy-2,2-dimethylacetophenon, 2,2-Dimethoxy-2-phenylacetophenon und deren Gemische.

Die erfindungsgemäßen Beschichtungsmassen enthalten die Photoinitiatoren vorzugsweise in einer Menge von 0,05 bis 10 Gew.-%, besonders bevorzugt 0,1 bis 8 Gew.-%, insbesondere 0,2 bis 5 Gew.-%, bezogen auf die Gesamtmenge der Polyurethane (A).

Die Einstellung der Rheologie einer Beschichtungsmasse ist möglich, indem man die erfindungsgemäßen Rheologiehilfsmittel (A) wie oben beschrieben in einem Lösungsmittel herstellt und diese Lösung des Rheologiehilfsmittels (A) dann vor der Applikation mit der Komponente (C) sowie optional weiteren lacküblichen Zusatzstoffen zur Beschichtungsmasse vermischt.

Bevorzugt ist jedoch die Ausführungsform das Rheologiehilfsmittel (A) in einem Reaktivverdünner, bevorzugt in zumindest einem Teil, besonders bevorzugt in der gesamten Menge der Komponente (C) herzustellen und so die Beschichtungsmasse ohne notwendigkeit eines Lösungsmittels optional unter weiterer Beimischung lacküblicher Zusatzstoffe applikationsbereit zu erhalten.

In einer bevorzugten Ausführungsform der vorliegenden Erfindung beträgt der Gehalt an Harnstoffgruppen der Formel (I) in den Beschichtungsmassen, bezogen auf die Summe der Komponenten (A) und (C) mindestens 0,03 mol Harnstoffgruppen der Formel (I) pro kg der Summe der Komponenten (A) und (C), besonders bevorzugt mindestens 0,05 mol/kg, ganz besonders bevorzugt mindestens 0,07 mol/kg.

In der Regel sollte der Gehalt an Harnstoffgruppen der Formel (I) einen Gehalt von 0,5 mol/kg nicht überschreiten, bevorzugt nicht mehr als 0,3 mol/kg, besonders bevorzugt nicht mehr als 0,2 mol/kg und ganz besonders bevorzugt nicht mehr als 0,1 mol/kg.

Die erfindungsgemäßen Beschichtungsmasse können optional weitere lackübliche Zusatzstoffe, wie Verlaufsmittel, Entschäumer, UV-Absorber, sterisch gehinderte Amine (HALS), Weichmacher, Antiabsetzmittel, Farbstoffe, Pigmente, Antioxidantien, Aktivatoren (Beschleuniger), antistatische Agentien, Flammschutzmittel, oberflächenaktive Agentien, andere Viskositätsmodifikatoren als die in dieser Schrift beschriebenen, Plastifzierer oder Chelatbildner und/oder Füllstoffe enthalten.

Die erfindungsgemäßen Polyurethane (A) können bezogen auf die Summe der Verbindungen (A) 0 bis 10 Gew% mindestens eines UV Stabilisators enthalten.

Geeignete Stabilisatoren umfassen typische UV-Absorber wie Oxanilide, Triazine, bevorzugt Hydroxyphenyltriazin, und Benzotriazol (letztere erhältlich als Tinuvin® -Marken der Ciba Spezialitätenchemie bzw. BASF) und Benzophenone.

Diese können allein oder zusammen mit bezogen auf die Summe der Verbindungen (A) zusätzlich 0 bis 5 Gew% an geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat oder bevorzugt Bis(1,2,2,6,6-pentamethyl-4-piperidyl)sebacat, eingesetzt werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis*iso*-butyronitril, Cyclohexylsulfonylacetylperoxid, Di-*iso*-propylpercarbonat, *tert*-Butylperoktoat oder Benzpinakol, sowie beispielsweise solche thermisch aktivierbare Initiatoren, die eine Halbwertszeit bei 80 °C von mehr als 100 Stunden aufweisen, wie Di-t-Butylperoxid, Cumolhydroperoxid, Dicumylperoxid, t-Butylperben-zoat, silylierte Pinakole, die z. B. unter dem Handelsnamen ADDID 600 der Firma Wacker kommerziell erhältlich sind oder Hydroxylgruppenhaltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil R der Fa. Degussa, Kieselerde, Talkum, Aluminiumsilikate, Magnesiumsilikate, Calciumcarbonate etc. Geeignete Stabilisatoren umfassen typische UV-Absorber wie Oxanilide, Triazine und Benzotriazol (letztere erhältlich als Tinuvin R-Marken der Ciba Spezialitätenchemie bzw. BASF) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-% bezogen auf die in der Zubereitung enthaltenen "festen" Komponenten eingesetzt.

Die erfindungsgemäßen Polyurethane (A) werden bevorzugt als Mischungen mit den Reaktivverdünnern (C) eingesetzt.

Dabei beträgt der Anteil der Polyurethane (A) an der Gesamtmenge von (A) und (C) in der Regel von 1 Gew% bis 30 Gew%, bevorzugt von 2 bis 25 Gew%, besonders bevorzugt von 5 bis 20 Gew%, ganz besonders bevorzugt von 7 bis 15 Gew% und insbesondere von 10 bis 15 Gew%.

Die erfindungsgemäßen Polyurethane (A) sind in der Regel pro 100 mol% reaktive Isocyanatgruppen in (a1) und (a7) (in Summe) wie folgt zusammengesetzt:
(a2) 30 bis 95 mol%, bevorzugt 40 bis 92 mol%, besonders bevorzugt 50 bis 90 mol%, ganz besonders bevorzugt 60 bis 80 mol% und insbesondere 70 bis 80 mol%,
(a3) 0 bis 30 mol%, bevorzugt 0 bis 25 mol%, besonders bevorzugt 0 bis 20 mol%, ganz besonders bevorzugt 0 bis 15 mol%, insbesondere 0 bis 10 mol% und speziell 0%,
(a4) 0 bis 10 mol%, bevorzugt 0 bis 8 mol%, besonders bevorzugt 0 bis 5 mol%, ganz besonders bevorzugt 0 bis 3 mol% und insbesondere 0 mol%,
(a5) 5 bis zu 30 mol%, bevorzugt 8 bis 25 mol%, besonders bevorzugt 10 bis 20 mol%, ganz besonders bevorzugt 15 bis 20 mol% und insbesondere 18 bis 20 mol%,
(a6) bis zu 10 mol%, bevorzugt bis zu 8 mol%, besonders bevorzugt bis zu 5 mol%, ganz besonders bevorzugt bis zu 2 mol% und insbesondere 0 mol%, jeweils bezogen auf die gegenüber Isocyanat reaktiven Gruppen,
   mit der Maßgabe, daß die Summe aller gegenüber Isocyanat reaktiven Gruppen 80 bis 125 mol% der reaktiven Isocyanatgruppen in (a1) und (a7) (in Summe) beträgt, bevorzugt 85 bis 115 mol%, besonders bevorzugt 90 bis 110 mol%, ganz besonders bevorzugt 95 bis 105 mol% und insbesondere 100 mol%.

Das Verhältnis von (a1) zu (a7) bezogen auf die reaktiven Isocyanatgruppen beträgt in der Regel 1 : 0 bis 1 : 2, bevorzugt 1 : 0 bis 1 : 1,5, besonders bevorzugt 1 : 0 bis 1 : 1,2, ganz besonders bevorzugt 1 : 0 bis 1 : 1, insbesondere 1 : 0 bis 1 : 0,5 und speziell 1 : 0.

Das zahlenmittlere Molekulargewicht Mₙ der erfindungsgemäßen Polyurethane (A), bestimmt durch Gelpermeationschromatographie mit Tetrahydrofuran als Elutionsmittel und Polystyrol als Standard, kann beispielsweise bis zu 50000, bevorzugt bis zu 30000, besonders bevorzugt bis zu 10000 und insbesondere bis zu 5000 betragen.

Der Gehalt an Isocyanatgruppen, berechnet als NCO mit dem Molekulargewicht 42 g/mol beträgt bei den erfindungsgemäßen Polyurethanen bis zu 5 Gew%, bevorzugt bis zu 3 Gew%, besonders bevorzugt bis zu 2 Gew%, ganz besonders bevorzugt bis zu 1 Gew% und insbesondere bis zu 0,5 Gew%. In einer speziellen Ausführungsform beträgt der Gehalt an freien Isocyanatgruppen in (A) 0 Gew%. Falls blockierte Isocyanatgruppen enthalten sind, so werden diese in den Gehalt an Isocyanatgruppen mit einberechnet.

Bevorzugt weist das Polyurethan (A) ein Glasübergangstemperatur von mehr als 20 °C, bevorzugt mehr als 25 °C auf.

Die Glasübergangstemperatur Tg wird mit der DSC-Methode (Differential Scanning Calorimetry) gemäß ASTM 3418/82 mit einer Aufheizrate von 10 °C/min bestimmt.

Zur Herstellung der erfindungsgemäßen Polyurethane werden die Ausgangskomponenten (a1) bis (a7), soweit eingesetzt, bei Temperaturen von 40 bis 180°C, vorzugsweise 50 bis 150°C, unter Einhaltung des oben angegebenen NCO-/OH-Äquivalentverhältnisses miteinander umgesetzt.

Die Umsetzung erfolgt in der Regel solange, bis die gewünschte NCO-Zahl gemäß DIN 53185 erreicht ist.

Die Reaktionsdauer beträgt in der Regel 10 min bis 12 Stunden, bevorzugt 15 min bis 10 Stunden, besonders bevorzugt 20 min bis 8 Stunden und ganz besonders bevorzugt 1 bis 8 Stunden.

Zur Beschleunigung der Reaktion können gegebenenfalls geeignete Katalysatoren eingesetzt werden.

Die Bildung des Addukts aus isocyanatgruppenhaltiger Verbindung und der Verbindung, die gegenüber Isocyanatgruppen reaktive Gruppen enthält, erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, besonders bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird zunächst die isocyanatgruppenhaltige Verbindung (a1) vorgelegt, daraufhin (a2) und anschließend (a5) zugegeben oder bevorzugt zunächst die isocyanatgruppenhaltige Verbindung (a1) vorgelegt, daraufhin (a5) und anschließend (a2) zugegeben. Nachfolgend können gegebenenfalls gewünschte weitere Komponenten zugegeben werden.

Selbstverständlich können (a2) und (a5) auch im Gemisch miteinander zugegeben werden.

Zur Herstellung der Beschichtungsmassen kann das hergestellte Polyurethan mit dem Reaktivverdünner (C) vermischt werden, in einer bevorzugten Ausführungsform wird das Polyurethanacrylat (A) in zumindest einem Teil des Reaktivverdünners (C) hergestellt.

Die erfindungsgemäßen Beschichtungsmassen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, und insbesondere von Metallen oder beschichteten Metallen.

Vorteilhafterweise bilden die erfindungsgemäßen Beschichtungsmassen nach Härtung durch energiereiche Strahlung Filme mit guten anwendungstechnischen Eigenschaften, wie eine gute Kratzbeständigkeit, gute Chemikalienfestigkeit, gute Witterungsstabilität und/oder gute mechanische Eigenschaften aus.

Die Beschichtung der Substrate erfolgt nach üblichen, dem Fachmann bekannten Verfahren, wobei man wenigstens eine erfindungsgemäße Beschichtungsmasse auf das zu beschichtende Substrat in der gewünschten Stärke aufbringt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Zur Entfernung flüchtiger Bestandteile, wie beispielsweise Lösungsmittel, kann nach dem Aufbringen auf das Substrat getrocknet werden, beispielsweise in einem Tunnelofen oder durch Ablüften. Die Trocknung kann auch durch NIR-Strahlung erfolgen, wobei als NIR-Strahlung hier elektromagnetische Strahlung im Wellenlängenbereich von 760 nm bis 2,5µm, bevorzugt von 900 bis 1500 nm bezeichnet ist.

Gegebenenfalls kann, wenn mehrere Schichten des Beschichtungsmittels übereinander aufgetragen werden, nach jedem Beschichtungsvorgang eine Strahlungshärtung erfolgen.

Die Strahlungshärtung erfolgt durch Einwirkung energiereicher Strahlung, also UV-Strahlung oder Tageslicht, vorzugsweise Licht der Wellenlänge 250 bis 600 nm oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, E-delgase, Kohlendioxid oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der
DE-A1 199 57 900 beschrieben ist.

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Diesen unterschiedlichen zeitlichen Verlauf der Härtung kann man sich insbesondere dann zu Nutze machen, wenn sich an die Beschichtung des Gegenstandes noch ein Verarbeitungsschritt anschließt, bei dem die Filmoberfläche in direkten Kontakt mit einem anderen Gegenstand tritt oder mechanisch bearbeitet wird.

Ein weiterer Gegenstand der Erfindung ist die Verwendung einer Beschichtungsmasse, wie zuvor beschrieben, zur Beschichtung von Substraten aus Metall, Holz, Papier, Keramik, Glas, Kunststoff, Textil, Leder, Vlies oder mineralischen Baustoffen.

Die erfindungsgemäßen Beschichtungsmassen können insbesondere als Grundierungen, Füller, pigmentierte Decklacke und Klarlacke im Bereich Industrie-, insbesondere Flugzeug- oder Großfahrzeuglackierung, Holz-, Auto-, insbesondere OEM- oder Autoreparaturlackierung, oder Dekolackierung eingesetzt werden. Besonders geeignet sind die Beschichtungsmittel für Anwendungen, in denen eine besonders hohe Applikationssicherheit, Außenwitterungsbeständigkeit, Optik, Lösemittel- und/oder Chemikalienfestigkeit sowie Kratzbeständigkeit gefordert werden.

Ein weiterer Gegenstand der Erfindung ist die Verwendung der Polyurethane (A) als Viskositätsregler, bevorzugt als Viskositätsregler für strahlungshärtbare Beschichtungsmassen.

Die Erfindung wird anhand der folgenden, nicht einschränkenden Beispiele näher erläutert.

### Beispiele

Soweit nicht anders angegeben, beziehen sich angegebene Teile und Prozente auf das Gewicht.

Folgende Verbindungen wurden in den Beispielen eingesetzt:

| | |
|---|---|
| Laromer^{®} LR 8863 | der BASF, Ludwigshafen: Triacrylat von im statistischem Mittel etwa 3,5fach ethoxyliertem Trimethylolpropan. |
| Laromer^{®} LR9000 | der BASF, Ludwigshafen: allophanatgruppenhaltiges Isocyanatoacrylat auf Basis 1,6-Hexamethylendiisocyanat mit einem NCO-Wert von 14.5 - 15.5%, einer Viskosität gemäß DIN EN ISO 3219 (Scherrate D) bei 23°C von 1000 bis 1400 mPas und einer Doppelbindungsdichte von etwa 3,5 mol/kg. |
| Laromer^{®} LR 8987 | der BASF, Ludwigshafen: isocyanurat- und biuretgrupenhaltiges Polyurethanacrylat auf Basis 1,6-Hexamethylendiisocyanat, 70%ig gelöst in 1,6-Hexandioldiacrylat, Doppelbindungsdichte von etwa 5 mol/kg, Viskosität gemäß DIN EN ISO 3219 (Scherrate D, 100 s⁻¹) bei 23°C von 4 bis 6 Pas |
| Laromer^{®} UA 9050 | der BASF, Ludwigshafen: Polyurethanacrylat (allophanatgruppenhaltiges Isocyanatoacrylat auf Basis 1,6-Hexamethylendiisocyanat) mit einer Doppelbindungsdichte von von etwa 7 mol/kg. |
| Basonat® HI100 | der BASF, Ludwigshafen: Polyisocyanurat auf Basis 1,6-Hexamethylendiisocyanat, NCO-Wert 21,5 - 22,5%, Viskosität gemäß DIN EN ISO 3219 (Scherrate D) bei 23°C 2500 - 4000 mPas |
| Irgacure® 184 | 1-Hydroxy-cyclohexyl-phenyl-keton |
| Lucirin® TPO | 2,4,6-Trimethylbenzoyldiphenylphosphinoxid |
| Irgacure® 500 1:1 | Gemisch von 50 Gew% 1-Hydroxy-cyclohexyl-phenyl-keton und 50 Gew% Benzophenon |

### Beispiel 1:

900 Teile eines Polyetheracrylates (Laromer^{®} LR 8863) und 34,5 Teile eines Isocyanatoacrylats (Laromer^{®} LR9000) wurden in einem Reaktionskolben vorgelegt und es wurden bei Raumtemperatur bei starker Rührung (3000 U/min) innerhalb von 5 Minuten 13,2 Teile Benzylamin zugetropft, wobei die Temperatur leicht anstieg. Dann wurde 30 Minuten weiter bei 2500 U/min gerührt. Der Reaktionsansatz wurde trüb und nach ca. 15 Minuten gelartig. Nach dem Abkühlen floß der Reaktionsansatz nicht mehr, war jedoch durch Scherung oder Schütteln wieder in den flüssigen Zustand überführbar.

### Beispiel 2:

300 Teile eines Polyurethanacrylats (Laromer^{®} LR 8987) und 2,87 Teile eines Isocyanatoacrylats (Laromer^{®} LR9000) wurden in einem Reaktionskolben vorgelegt und es wurden bei Raumtemperatur bei starker Rührung (3000 U/min) innerhalb von 5 Minuten 1,1 Teile Benzylamin zugetropft, wobei die Temperatur leicht anstieg. Dann wurde 30 Minuten weiter bei 4000 U/min gerührt. Der Reaktionsansatz wurde hochviskos. Der Reaktionsansatz wurde durch Scherung oder Schütteln niedrigviskoser.

### Beispiel 3:

300 Teile eines Polyurethanacrylats (Laromer^{®} LR 8987) und 11,5 Teile eines Isocyanatoacrylats (Laromer^{®} LR9000) wurden in einem Reaktionskolben vorgelegt und es wurden bei Raumtemperatur bei starker Rührung (3000 U/min) innerhalb von 5 Minuten 4,4 Teile Benzylamin zugetropft, wobei die Temperatur leicht anstieg. Dann wurde 30 Minuten weiter bei 4000 U/min gerührt. Der Reaktionsansatz wurde sehr hochviskos. Nach dem Abkühlen floß der Reaktionsansatz nicht mehr, war jedoch durch Scherung oder Schütteln wieder in den flüssigen Zustand überführbar.

### Beispiel 4:

25 Teile des Beispiels 3 wurden zu 175 Teilen eines Polyurethanacrylats (Laromer^{®} LR 8987) gegeben und bei 80°C mit einem Dissolver bei 4000 U/min (Dispergierscheibe 3 cm) für 2 Stunden homogenisiert.
Die Mischung war homogen und wies eine höhere Viskosität als das reine Polyurethanacrylat (Laromer^{®} LR 8987) auf.

### Beispiel 5:

100 Teile eines Polyisocyanurats (Basonat® HI100) und 20,25 Teile Hydroxyethylacrylat wurden bei Raumtemperatur gemischt, mit 0,03 Teilen Dibutylzinndilaurat versetzt und 3 Stunden bei 60°C gerührt. Der NCO Wert fiel von 22% auf 12,2% ab. 3,6 Teile des so hergestellten Isocyanatoacrylats wurden in ein Zulaufgefäß gegeben. In den Vorlagekolben gab man 90 Teile eines Polyetheracrylates (Laromer^{®} LR 8863) und tropfte die Vorlage unter starkem Rühren langsam zu. Dazu gab man dann unter starkem Rühren (2500 U/min) 1,1 Teile Benzylamin. Nachdem die leicht exotherme Reaktion abgeklungen war, ließ man noch 30 Minuten rühren. Der Reaktionsansatz wurde trüb und gelierte nach ca. 15 Minuten. Er war jedoch durch Scherung oder Schütteln wieder in den flüssigen Zustand überführbar.

### Beispiel 6:

64 Teile eines Polyurethanacrylats (Laromer^{®} UA 9050), 50 Teile eines Isocyanatoacrylats (Laromer^{®} LR9000), 75 Teile eines Monoacrylats (t-Butylcyclohexylacrylat), 2,4 Teile Tinuvin® 400 (2-[4-[2-Hydroxy-3-tridecyloxypropyl]oxy]-2-hydroxyphenyl]-4,6-bis(2,4-dimethylphenyl)-1,3,5-triazin und 2-[4-[2-hydroxy-3-didecyloxypropyl]oxy]-2-hydroxyphenyl]-4,6-bis(2,4-dimethylphenyl)-1,3,5-triazin), 1,2 Teile Tinuvin® 292 (Bis(1,2,2,6,6-pentamethyl-4-piperidyl)sebacat) und 5 Teile einer Photoinitiatormischung (Irgacure® 184 und Lucirin® TPO 8:2) wurden in einem Reaktionskolben vorgelegt und es wurden bei Raumtemperatur bei starker Rührung (3000 U/min) innerhalb von 5 Minuten 3,4 Teile Benzylamin zugetropft, wobei die Temperatur leicht anstieg. Dann wurde 30 Minuten weiter bei 4000 U/min gerührt. Der Reaktionsansatz wurde sehr hochviskos.

### Beispiel 7:

900 Teile eines Polyetheracrylates (Laromer^{®} LR 8863) und 34,5 Teile eines Isocyanatoacrylats (Laromer^{®} LR9000) wurden in einem Reaktionskolben vorgelegt und es wurden bei Raumtemperatur bei starker Rührung (3000 U/min) innerhalb von 5 Minuten 13,2 Teile Benzylamin zugetropft, wobei die Temperatur leicht anstieg. Dann wurde 30 Minuten weiter bei 2500 U/min gerührt. Der Reaktionsansatz wurde trüb und nach ca. 15 Minuten gelartig. Nach dem Abkühlen floß der Reaktionsansatz nicht mehr, war jedoch durch Scherung oder Schütteln wieder in den flüssigen Zustand überführbar.

### Beispiel 8: Vergleich der Filmeigenschaften

Je 10 Teile des unadditivierten Laromer® 8863 und der Reaktionsprodukte aus Beispiel 1 und Beispiel 7 wurden mit je 0,2 Teilen des Photoinitiators Irgacure® 500 versetzt" mit einem Kastenrakel mit 100 µm Spalt auf Glas aufgezogen und unter einer UV Lampe mit 1400 mJ/cm² unter Luft belichtet.

Es resultieren folgende Pendeldämpfungswerte:

| | |
|---|---|
| Referenz Laromer® 8863 | 115 s |
| Beispiel 1: | 113 s |
| Beispiel 7: | 108 s |

### Beispiel 9:

100 Teile eines Polyetheracrylates (Laromer^{®} LR 8863) und 4,5 Teile eines Umsetzungsproduktes von 2,25 Teilen des Isocyanatoacrylats (Laromer^{®} LR9000) mit einem Teil eines Polyesters aus Adipinsäure und Neopentylglkykol mit einem Molekulargewicht von ca. 500 g/mol (OH Zahl 224) wurden in einem Reaktionskolben vorgelegt und es wurden bei Raumtemperatur bei starker Rührung (3000 U/min) innerhalb von 5 Minuten 0,65 Teile Benzylamin zugetropft, wobei die Temperatur leicht anstieg. Dann wurde 30 Minuten weiter bei 2500 U/min gerührt. Der Reaktionsansatz wurde trüb und nach ca. 3 Stunden gelartig. Nach dem Abkühlen floß der Reaktionsansatz nicht mehr, war jedoch durch Scherung oder Schütteln wieder in den flüssigen Zustand überführbar.

### Beispiel 10:

100 Teile eines Polyetheracrylates (Laromer^{®} LR 8863) und 7,04 Teile eines Umsetzungsproduktes von 1,12 Teilen des Isocyanatoacrylats (Laromer^{®} LR9000) mit einem Teil eines Polyesters aus Adipinsäure und Butandiol mit einem Molekulargewicht von ca. 1000 g/mol (OH Zahl 112) wurden in einem Reaktionskolben vorgelegt und es wurden bei Raumtemperatur bei starker Rührung (3000 U/min) innerhalb von 5 Minuten 0,66 Teile Benzylamin zugetropft, wobei die Temperatur leicht anstieg. Dann wurde 30 Minuten weiter bei 2500 U/min gerührt. Der Reaktionsansatz wurde trüb und nach ca. 3 Stunden gelartig. Nach dem Abkühlen floß der Reaktionsansatz nicht mehr, war jedoch durch Scherung oder Schütteln wieder in den flüssigen Zustand überführbar.

### Beispiel 11:

100 Teile eines Polyetheracrylates (Laromer^{®} LR 8863) und 1,52 Teile eines Isocyanatoacrylats (Laromer^{®} LR9000) wurden in einem Reaktionskolben vorgelegt und wurden bei Raumtemperatur bei schwacher Rührung (200 U/min) innerhalb von 30 Minuten gemischt und dann innerhalb einer Minute 0,5 Teile 3-Methoxypropylamin zugetropft, wobei die Temperatur leicht anstieg. Dann wurde 60 Minuten weiter bei 200 U/min gerührt. Der Reaktionsansatz wurde beim Stehen über Nacht leicht trüb. Das Gemisch zieht in der Viskosität auf ca. 4000 mPas an und wird durch Scherung oder Schütteln wieder niedrigviskos. Beim erneuten Stehen zieht die Viskosität wieder auf das Niveau von ca. 5000 mPas an.

## Patentansprüche

1. Rheologiehilfsmittel,
aufgebaut aus
(a1) mindestens einem aliphatischen und/oder cycloaliphatischen Diisocyanat und/oder mindestens einem Polyisocyanat auf Basis aliphatischer und/oder cycloaliphatischer Diisocyanate,
(a2) wenigstens einer Verbindung mit mindestens einer, bevorzugt genau einer gegenüber Isocyanatgruppen reaktiven Gruppe und mindestens einer radikalisch polymerisierbaren C=C-Doppelbindung,
(a3) optional wenigstens einer Verbindung mit mindestens zwei gegenüber Isocyanat-gruppen reaktiven Gruppen, die ausgewählt sind unter Hydroxy-, Mercapto-, primären und/oder sekundären Aminogruppen, mit einem zahlenmittleren Molgewicht Mn von nicht mehr als 500 g/mol,
(a4) optional wenigstens einer Verbindung mit mindestens zwei gegenüber Isocyanat-gruppen reaktiven Gruppen, die ausgewählt sind unter Hydroxy-, Mercapto-, primären und/oder sekundären Aminogruppen, mit einem zahlenmittleren Molgewicht Mn von mehr als 500 g/mol,
(a5) mindestens einem Amin der Formel (III)
H-NR¹R²,
sowie
(a6) optional wenigstens einer von (a2) und (a5) verschiedenen Verbindung, die genau eine gegenüber Isocyanatgruppen reaktive Gruppe aufweist sowie
(a7) optional wenigstens einem von (a1) verschiedenen Polyisocyanat
enthaltend
- mindestens eine (Meth)acrylatgruppe und damit verbunden
- mindestens einer Harnstoffgruppe der Formel (I)
-NH-(CO)-NR¹R²
worin
R¹ und R² jeweils unabhängig voneinander Wasserstoff, Alkyl, Aryl, Cycloalkyl, Aralkyl bedeuten, mit der Maßgabe, daß mindestens einer der Reste ungleich Wasserstoff ist,
wobei es sich bei der Verbindung (a1) um allophanatgruppenhaltige Polyisocyanate handelt, in denen zumindest ein Teil der Komponenten (a2) über Allophanatgruppen gebunden ist.

2. Rheologiehilfsmittel gemäß Anspruch 1, **dadurch gekennzeichnet, daß** mindestens einer, bevorzugt genau einer der beiden Reste R¹ und R² einen Rest der Formel (II) darstellt
-R³-R⁴,
worin
R³ für C₁ bis C₁₀-Alkylen, bevorzugt C₁ bis C₄-AlKylen, besonders bevorzugt C₁ bis C₂-Alkylen, und ganz besonders bevorzugt Methylen und
R⁴ für optional substituiertes, bevorzugt unsubstituiertes C₆ bis C₁₂-Aryl steht.

3. Rheologiehilfsmittel gemäß Anspruch 2, **dadurch gekennzeichnet, daß** einer der Reste R¹ und R² Wasserstoff und einer einen Rest der Formel (II) darstellt.

4. Rheologiehilfsmittel gemäß Anspruch 1, **dadurch gekennzeichnet, daß** das Amin der Formel (III) ausgewählt ist aus der Gruppe bestehend aus Anilinen, Benzylaminen, substituierten Benzylamine, optisch aktiven Aminen und 9-Amino-fluoren.

5. Rheologiehilfsmittel gemäß Anspruch 1, **dadurch gekennzeichnet, daß** das Amin der Formel (III) ausgewählt ist aus der Gruppe bestehend aus N-Methylbenzylamin, N-Ethylbenzylamin, N-Isopropylbenzylamin, N-Phenylbenzylamin, Dibenzylamin, 2-Methoxybenzylamin, 2-Chlorbenzylamin, 4-Fluorbenzylamin, 4-Methylbenzylamin, 4-Methoxybenzylamin, 3-(Trifluormethyl)-benzylamin, 2,6-Difluorbenzylamin, 3,4-Dichlorbenzylamin, N-Benzyl-2-phenethylamin, 1-Naphthylmethylamin, 4-Hydroxy-3-methoxybenzylamin (Vanillyiamin), 1,2,3,4-Tetrahydroisochinolin und Phenethylamin.

6. Strahlungshärtbare Beschichtungsmasse, enthaltend
- mindestens ein Rheologiehilfsmittel gemäß einem der Ansprüche 1 bis 5,
- mindestens einen Reaktivverdünner, sowie
- optional mindestens einen Photoinitiator.

7. Strahlungshärtbare Beschichtungsmasse gemäß Anspruch 6, **dadurch gekennzeichnet, daß** der Gehalt an Harnstoffgruppe der Formel (I) wie definiert in Anspruch 1 mindestens 0,03 mol Harnstoffgruppe der Formel (I) pro kg der Summe aus Rheologiehilfsmittel und Reaktivverdünner beträgt.

8. Verfahren zur Herstellung von strahlungshärtbaren Beschichtungsmassen gemäß Anspruch 6, **dadurch gekennzeichnet, daß** man das Rheologiehilfsmittel gemäß einem der Ansprüche 1 bis 5 in zumindest einem Teil des mindestens einen Reaktivverdünners herstellt und mit dem optional mindestens einen Photoinitiator sowie optional weiteren lacküblichen Zusatzstoffen vermischt.

9. Verwendung von Beschichtungsmasse gemäß Anspruch 6 zur Beschichtung von Substraten aus Metall, Holz, Papier, Keramik, Glas, Kunststoff, Textil, Leder, Vlies oder mineralischen Baustoffen.

10. Verwendung von Rheologiehilfsmittel gemäß einem der Ansprüche 1 bis 5 als Viskositätsregler für strahlungshärtbare Beschichtungsmassen.

## Claims

1. A rheological assistant,
synthesized from
(a1) at least one aliphatic and/or cycloaliphatic diisocyanate and/or at least one polyisocyanate based on aliphatic and/or cycloaliphatic diisocyanates,
(a2) at least one compound having at least one, preferably precisely one, group reactive toward isocyanate groups, and at least one free-radically polymerizable C=C double bond,
(a3) optionally at least one compound having at least two groups reactive toward isocyanate groups and selected from hydroxyl, mercapto, primary and/or secondary amino groups, having a number-average molar weight Mn of not more than 500 g/mol,
(a4) optionally at least one compound having at least two groups reactive toward isocyanate groups and selected from hydroxyl, mercapto, primary and/or secondary amino groups, having a number-average molar weight Mn of more than 500 g/mol,
(a5) at least one amine of the formula (III)
H-NR¹R²,
and also
(a6) optionally at least one compound which is different from (a2) and (a5) and which has precisely one group reactive toward isocyanate groups, and also
(a7) optionally at least one polyisocyanate different from (a1) comprising
- at least one (meth)acrylate group and connected thereto
- at least one urea group of the formula (I)
-NH-(CO)-NR¹R²
in which
R¹ and R² each independently of one another are hydrogen, alkyl, aryl, cycloalkyl or aralkyl, with the proviso that at least one of the radicals is other than hydrogen,
where the compound (a1) comprises polyisocyanates containing allophanate groups, in which at least some of the components (a2) are attached via allophanate groups.

2. The rheological assistant according to claim 1, wherein at least one, preferably precisely one, of the two radicals R¹ and R² is a radical of the formula (II)
-R³-R⁴,
in which
R³ is C₁ to C₁₀ alkylene, preferably C₁ to C₄ alkylene, more preferably C₁ to C₂ alkylene, and very preferably methylene, and
R⁴ is optionally substituted, preferably unsubstituted, C₆ to C₁₂ aryl.

3. The rheological assistant according to claim 2, wherein one of the radicals R¹ and R² is hydrogen and one is a radical of the formula (II).

4. The rheological assistant according to claim 1, wherein the amine of the formula (III) is selected from the group consisting of anilines, benzylamines, substituted benzylamines, optically active amines, and 9-aminofluorene.

5. The rheological assistant according to claim 1, wherein the amine of the formula (III) is selected from the group consisting of N-methylbenzylamine, N-ethylbenzylamine, N-isopropylbenzylamine, N-phenylbenzylamine, dibenzylamine, 2-methoxybenzylamine, 2-chlorobenzylamine, 4-fluorobenzylamine, 4-methylbenzylamine, 4-methoxybenzylamine, 3-(trifluoromethyl)benzylamine, 2,6-difluorobenzylamine, 3,4-dichlorobenzylamine, N-benzyl-2-phenethylamine, 1-naphthylmethylamine, 4-hydroxy-3-methoxybenzylamine (vanillylamine), 1,2,3,4-tetrahydroisoquinoline, and phenethylamine.

6. A radiation-curable coating composition comprising
- at least one rheological assistant according to any of claims 1 to 5,
- at least one reactive diluent, and
- optionally at least one photoinitiator.

7. The radiation-curable coating composition according to claim 6, wherein the amount of urea group of the formula (I) as defined in claim 1 is at least 0.03 mol of urea group of the formula (I) per kg of the sum total of rheological assistant and reactive diluent.

8. A process for producing a radiation-curable coating composition according to claim 6, which comprises preparing the rheological assistant according to any of claims 1 to 5 in at least part of the at least one reactive diluent and mixing the product with the optionally at least one photoinitiator and also optionally further conventional coatings additives.

9. The use of a coating composition according to claim 6 for coating substrates of metal, wood, paper, ceramic, glass, plastic, textile, leather, nonwoven or mineral building materials.

10. The use of a rheological assistant according to any of claims 1 to 5 as a viscosity regulator for a radiation-curable coating composition.

## Revendications

1. Adjuvant de rhéologie,
constitué de
(a1) au moins un diisocyanate aliphatique et/ou cycloaliphatique et/ou au moins un polyisocyanate à base de diisocyanates aliphatiques et/ou cycloaliphatiques,
(a2) au moins un composé comportant au moins un, de préférence exactement un groupe réactif vis-à-vis de groupes isocyanate et au moins une double liaison C=C apte à la polymérisation radicalaire,
(a3) en option au moins un composé comportant au moins deux groupes réactifs vis-à-vis de groupes isocyanate, qui sont choisis parmi les groupes hydroxy, mercapto, amino primaires et/ou secondaires, ayant une masse moléculaire moyenne en nombre Mn n'excédant pas 500 g/mole,
(a4) en option au moins un composé comportant au moins deux groupes réactifs vis-à-vis de groupes isocyanate, qui sont choisis parmi les groupes hydroxy, mercapto, amino primaires et/ou secondaires, ayant une masse moléculaire moyenne en nombre Mn de plus de 500 g/mole, (a5) au moins une amine de formule (III)
H-NR¹R²,
ainsi que
(a6) en option au moins un composé différent de (a2) et (a5), qui comporte exactement un groupe réactif vis-à-vis de groupes isocyanate ainsi que
(a7) en option au moins un polyisocyanate différent de (a1)
contenant
- au moins un groupe (méth)acrylate et lié à celui-ci
- au moins un groupe urée de formule (I)
-NH-(CO)-NR¹R²
dans laquelle
R¹ et R² représentent chacun indépendamment l'un de l'autre un atome d'hydrogène, un groupe alkyle, aryle, cycloalkyle, aralkyle, étant entendu qu'au moins l'un des radicaux est différent d'un atome d'hydrogène,
le composé (a1) consistant en des polyisocyanates contenant des groupes allophanate, dans lesquels au moins une partie des composants (a2) est liée par l'intermédiaire de groupes allophanate.

2. Adjuvant de rhéologie selon la revendication 1, **caractérisé en ce qu'**au moins un, de préférence exactement un des deux radicaux R¹ et R² représente un radical de formule (II)
-R³-R⁴-
dans laquelle
R³ représente un groupe alkylène en C₁-C₁₀, de préférence alkylène en C₁-C₄, de façon particulièrement préférée alkylène en C₁-C₂, et de façon tout particulièrement préférée méthylène et
R⁴ représente un groupe aryle en C₆-C₁₂ en option substitué, de préférence non substitué.

3. Adjuvant de rhéologie selon la revendication 2, **caractérisé en ce qu'**un des radicaux R et R² représente un atome d'hydrogène et un représente un radical de formule (II).

4. Adjuvant de rhéologie selon la revendication 1, **caractérisé en ce que** l'amine de formule (III) est choisie dans le groupe constitué par les anilines, benzylamines, benzylamines substituées, amines optiquement actives et le 9-amino-fluorène.

5. Adjuvant de rhéologie selon la revendication 1, **caractérisé en ce que** l'amine de formule (III) est choisie dans le groupe constitué par la N-méthylbenzylamine, la N-éthylbenzylamine, la N-isopropylbenzylamine, la N-phénylbenzylamine, la dibenzylamine, la 2-méthoxybenzylamine, la 2-chlorobenzylamine, la 4-fluorobenzylamine, la 4-méthylbenzylamine, la 4-méthoxybenzylamine, la 3-(trifluorométhyl)-benzylamine, la 2,6-difluorobenzylamine, la 3,4-dichlorobenzylamine, la N-benzyl-2-phénéthylamine, la 1-naphtylméthylamine, la 4-hydroxy-3-méthoxybenzylamine (vanillylamine), la 1,2,3,4-tétrahydro-isoquinoléine et la phénéthylamine.

6. Matière de revêtement durcissable par irradiation, contenant
- au moins un adjuvant de rhéologie selon l'une quelconque des revendications 1 à 5,
- au moins un diluant réactif, ainsi qu'en option
- au moins un photoamorceur.

7. Matière de revêtement durcissable par irradiation selon la revendication 6, **caractérisée en ce que** la teneur en groupe urée de formule (I) telle que définie dans la revendication 1 est d'au moins 0,03 mole de groupe urée de formule (I) par kg de la somme d'adjuvant de rhéologie et de diluant réactif.

8. Procédé pour la production de matières de revêtement durcissables par irradiation selon la revendication 6, **caractérisé en ce qu'**on prépare l'adjuvant de rhéologie selon l'une quelconque des revendications 1 à 5 dans au moins une partie dudit au moins un diluant réactif et on le mélange avec ledit en option au moins un photoamorceur ainsi qu'en option d'autres additifs usuels pour peintures.

9. Utilisation de matière de revêtement selon la revendication 6 pour l'enduction de supports à base de métal, bois, papier, céramique, verre, matière plastique, textile, cuir, non-tissé ou matériaux de construction minéraux.

10. Utilisation d'adjuvant de rhéologie selon l'une quelconque des revendications 1 à 5 en tant que régulateur de viscosité pour des matières de revêtement durcissables par irradiation.
